# EUROPEAN PATENT SPECIFICATION

(11) **EP 1 884 457 B1**
(45) Date of publication and mention of the grant of the patent: **23.09.2009**
(21) Application number: 06117885.1
(22) Date of filing: 26.07.2006
(51) Int. Cl.: B62K 5/04, B60G 21/00, B62D 9/02

(54) **Motorcycle**
Motorrad
Motocyclette

(43) Date of publication of application: 06.02.2008
(73) Proprietor: YAMAHA MOTOR EUROPE N.V., 1119 NC Schiphol-Rijk (NL)
(72) Inventor: Marabese, Luciano, 21018 Sesto Calende (VA) (IT); Marabese, Riccardo, 20023 Cerro Maggiore (MI) (IT); Mochizuhi, Norisha, 1119 NC Schiphol-Rijk (NL); Meisner, Timmy, 1082 JC Amsterdam (NL)
(74) Representative: Vernout, Robert

(56) References cited:
- EP-A2- 1 362 779
- WO-A-20/04056645
- DE-A1- 3 611 417
- FR-A1- 2 616 405

## Description

The invention relates to a motorcycle vehicle, and improvements thereof. In particular the invention relates to a motorcycle vehicle comprising: a frame having vertical, longitudinal and lateral orientations in the upright position of the vehicle; at least one pair of two spaced apart swing arms pivotally mounted thereon at one end on a substantially laterally extending swing pivot axis, which swing arms extend in a substantially longitudinal direction in the upright position of the vehicle, wherein each swing arm bears a front or rear wheel at its other end on a wheel axis; a balancer beam rotatably mounted on a rotation axis on the frame near its centre; and at least two linking rods, each linking rod being pivotally connected to one end of the balancer beam at one end and being pivotally connected to one of said swing arms at its other end.

Such a motorcycle vehicle is described in EP-A-0606191, wherein said pair of swing arms is provided at the rear side of the frame. EP-A-1155950 describes a motorcycle vehicle having a pair of similarly swinging wheels at the front side, however having a different type of suspension of said wheels, which is also shown in WO-A-2005037637. This different type of swinging suspension does not allow for the combination of large leaning angles and a small width of the vehicle. WO-A-2005037637 further shows two pairs of swinging front and rear wheels, wherein each front wheel is connected with a rear wheel by a frame.

Document FR 2616405 A1 discloses a motorcycle vehicle according with the preamble of claim 1.

The invention generally aims at a compact, comfortable, manoeuvrable and/or stable motorcycle vehicle of the above mentioned kind. The invention however also may provide further advantages which will be apparent for the man skilled in the art from the following description.

In accordance with the present invention there is provided a motorcycle vehicle as set out in claim 1.

According to one aspect of the invention in the upright position of said vehicle one end of each of said linking rods is positioned below the swing plane extending trough both swing pivot axes and both wheel axes, and the other end of each of said linking rods is positioned above said swing plane. According to the state of the art the linking rods extend entirely above or under the swing arms in a substantially vertical direction. Since the linking rods should be of a certain length in order to be able to allow for a certain leaning angle of the vehicle, they cannot be shortened in order to build a more compact vehicle. In accordance with the invention the rods cross the plane of the swing arms as described above, whereby a much more compact vehicle can be obtained, while allowing the linking rods to retain their length.

Preferably said swing arms each comprise an extension, extending substantially above or below said swing plane, on which extension the linking rods are mounted. The rotation axis of said balancer beam preferably extends in a substantially longitudinal direction. Preferably said balancer beam extends below said swing plane. Preferably the length of said balancer beam is greater than the distance between the inner sides of the two associated front or rear wheels in the upright position of the motorcycle vehicle. Said balancer beam is preferably mounted on said frame by means of a balancer carrier beam, which balancer carrier beam is pivotally mounted on the frame at the other end on a substantially laterally extending balancer pivot axis, and which beam is further connected to the frame at a distance from said pivot axis by means of a shock absorber.

According to a further aspect of the invention said motorcycle vehicle is a four wheeled motorcycle vehicle comprising one said balancer, a pair of said linking rods and a pair of said swing arms on the front side of the frame each bearing one of said front wheels, and one said balancer, a pair of said linking rods and a pair of said swing arms on the back side of the frame each bearing one of said rear wheels. Such a four wheeled motorcycle has the advantage that it is extremely stable on all types of roads and in particular comfortable on rough roads. The motorcycle vehicle of EP-A-0626307 has one pair of swinging wheels, which is known to have a stabilising effect. Also two pairs of swinging wheels is known, for instance from WO-A-2005037637. However according to this document the front and back wheels of those two pairs of wheels are mutually linked by frames. Although such a four wheeled vehicle is in principle more stable on rough roads than the three wheeled vehicle of EP-A-0626307, the four wheeled vehicle of the invention is still more stable, and surprisingly so, due to the fact that the front and back pairs of wheels can swing independently.

Each of said wheels is preferably provided with a separate brake, such as a disc brake. Apart from the fact that this feature substantially improves the braking properties compared to a motorcycle vehicle having two brakes, this feature also makes it possible to maintain the motor vehicle firmly in the upright position by simply pulling or locking the brakes. This can be very convenient when the driver comes to a halt at a traffic light for instance without the need to use his feet, or when the driver parks the motorcycle vehicle without the need to use a stand. The distance between the centre points of the wheels (and equally the points where the wheels rest on the road) increases when the motorcycle vehicle leans to the side, which could cause for instance the front wheels to turn aside and ride to one side, thereby facilitating said increase in distance. This is prevented by the brakes, because the wheels are locked in their position on the road by those. In connection therewith, according to a further aspect of the invention the distance (D) between the parallel centre planes of the wheels is constant and at least 300 mm, preferably at least 400 mm, more preferably at least 450 mm. Preferably the distance is also smaller than 700 mm, morepreferably smaller than 550 mm, in order to allow for a sufficiently large lean angle of the vehicle. The relationship between the increase in distance (Δd) between the centre points, the distance (D) between the planes of the wheels and the lean angle (α) is as follows: Δd = D (1/(cos α) - 1), which shows that the larger D is, the larger Δd is as well. Also, the larger Δd is, the firmer the motorcycle vehicle will remain upright when the wheels are locked. Hence a large distance D between the centre planes of the wheels is advantageous in this respect.

According to a further aspect of the invention said frame is provided with at least one pair of stopper protrusions extending towards at least one pair of said swing arms or moving parts connected therewith, such that the upward inclination of said swing arms is limited. The outer ends of said stopper protrusions are preferably made of a resilient material, such as rubber or PVC. Thereby damage to the vehicle and/or the rider when the motorvehicle falls aside can be prevented.

According to a further aspect of the invention said motorcycle vehicle is provided with a motor engine, wherein each of said two wheels on a pair of swing arms is provided with a driven sprocket wheel, wherein said engine drives two driving sprocket wheels, which in turn each drive one of said two driven sprocket wheels by means of chains, wherein said driving sprocket wheels and/or said driven sprocket wheels are one-way sprocket wheels. Such sprocket wheels are for instance known in sports bicycles. In this manner the wheels do not skid on the road when the vehicle is making a turn, without the need to apply a complex and expensive differential gear. Alternatively and equivalently the wheels are mounted on their respective shafts in such a way that they can rotate freely in the forward direction.

According to a further aspect of the invention said motorcycle vehicle is provided with a motor engine having a driving shaft provided with a driving sprocket wheel or gear wheel, wherein an intermediate shaft comprising one driven sprocket wheel or gear wheel which is driven by said motor engine and two driving sprocket wheels is rotatably mounted on the pivot axis of said swing arms, wherein each of said two wheels on a pair of swing arms is provided with a driven sprocket wheel which is driven by a driving sprocket wheel on said intermediate shaft. Thereby the engine shaft itself does not need to extend on the pivot axis of the swing arms.
In order to be able to build a compact vehicle the driving shaft of said motor engine is preferably located in the quarter above said intermediate shaft. The term quarter in this respect means the space extending above the intermediate between two planes through that shaft, which planes include angles with the vertical plane of +45 degrees and -45 degrees respectively.

According to a further aspect of the invention the motorcycle vehicle comprises one pair of said swing arms at the front side of the vehicle, wherein the front wheels are suspended to a pair of substantially vertical rotatable suspension shafts on each of said swing arms, said suspension shafts being part of a pair of parallelogram swing arrangements each further comprising said swing arm, a secondary swing arm and said frame, wherein said suspension shafts each comprise a wheel steering arm extending to one side of the axis of said shaft; wherein said vehicle further comprises a handlebar for steering said front wheels, said handlebar being mounted on a substantially vertical steering shaft which is rotatably mounted in said frame, wherein a handlebar steering arm extends from said shaft; and wherein said handlebar steering arm on the one side and said wheel steering arms on the other side are mutually connected through a link arrangement.

According to a further aspect of the invention said link arrangement comprises a lever, a pair of first long rods and a second shorter rod; wherein said lever is rotatably mounted on said frame on a substantially vertical lever shaft; wherein first ends of said first rods are pivotally connected to the ends of each of said wheel steering arms, wherein the other ends of said first rods are pivotally connected to respective ends of said lever; and wherein a first end of said second rod is pivotally connected to the end of said handlebar steering arm and the other end of said second rod is pivotally connected to said lever. Said lever shaft preferably extends at a distance behind the steering shaft. Said handlebar steering arm preferably extends in an oblique backward direction from the steering shaft while the front wheels are in the forward direction. The other end of said second rod is preferably connected to a lever arm which extends in an oblique forward direction from the lever shaft while the front wheels are in the forward direction. These features are aimed at a compact motorcycle vehicle having a reliable steering arrangement, which provides good steering properties to the vehicle.

The invention will be illustrated by means of a preferred embodiment as shown in the attached drawings. In the drawings some common elements of the motorcycle vehicle, such as the saddle, the fuel and oil tanks, the motor engine, the brake, gear and gas handles/treadles and cables, the lights, etcetera, are not shown for the sake of clarity. Also the frame is shown merely schematically. In the Figures:
Figure 1 shows a side view of a motorcycle vehicle in the upright position;
Figure 2 shows rear view of the motorcycle vehicle in the upright position;
Figure 3 shows a rear view of the motorcycle vehicle in a leaning position; and
Figures 4, 5, 6 and 7 show perspective views of the motorcycle vehicle in the leaning position of Figure 4.

In the reference numerals the letter R means either "rear" or "right", the letter F means "front" and the letter L means "left".

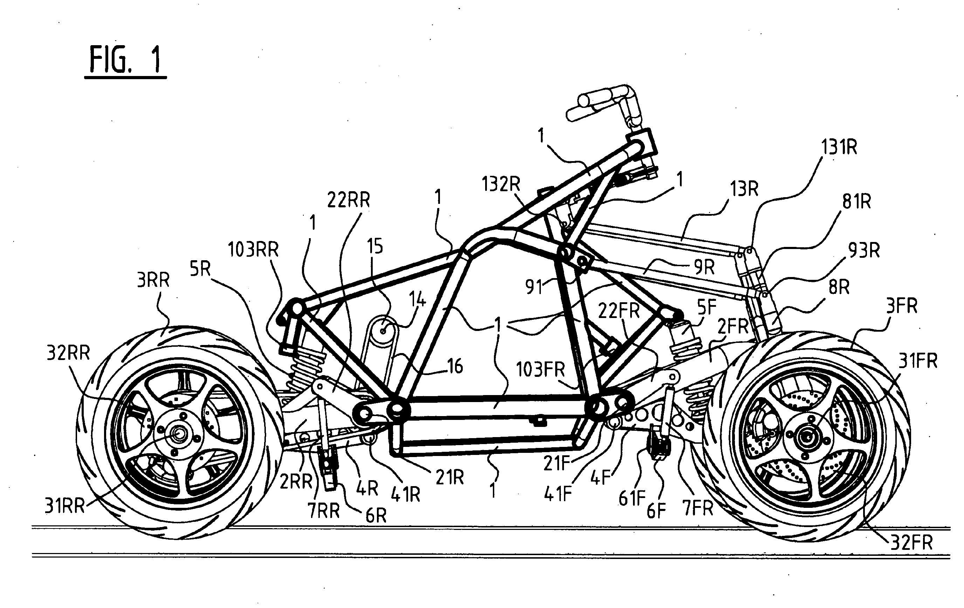

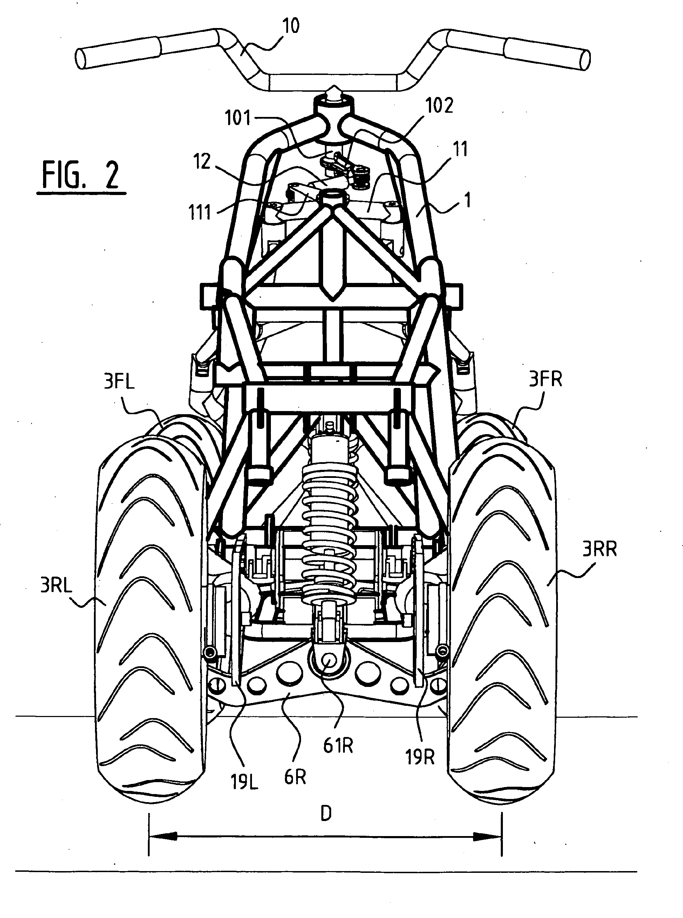

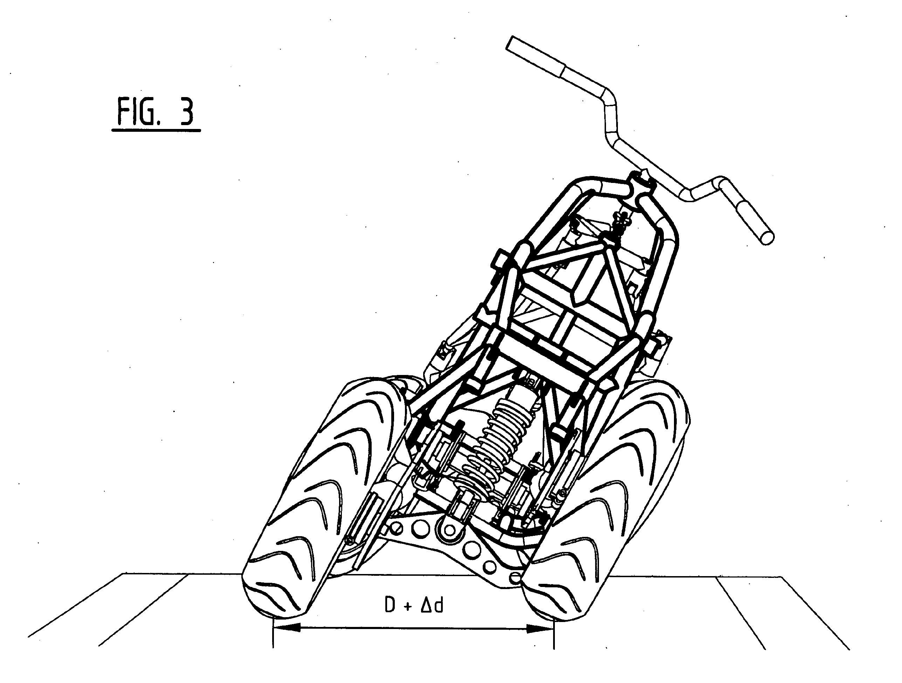

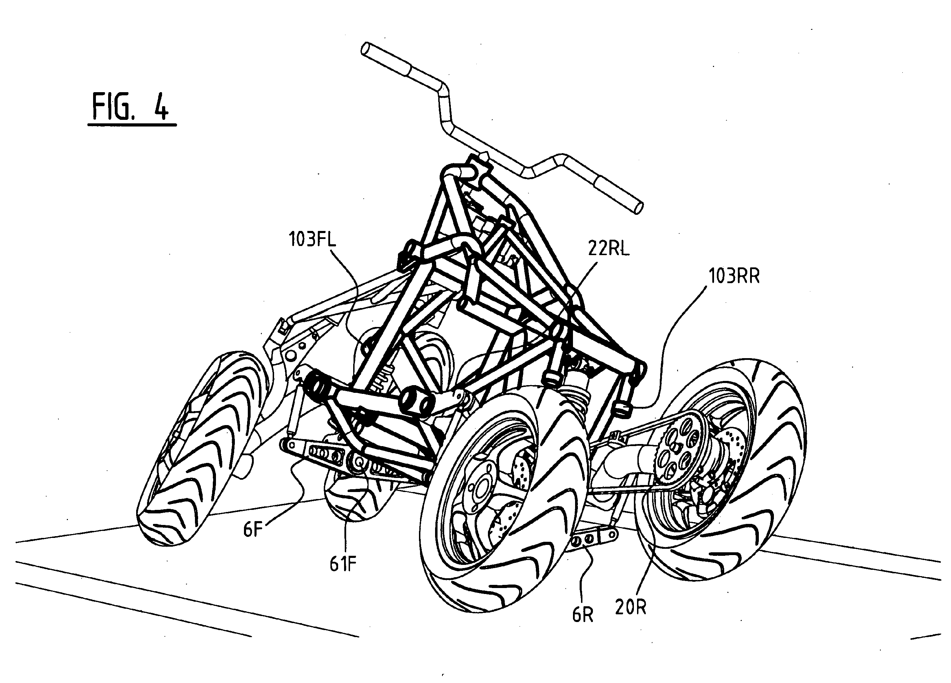

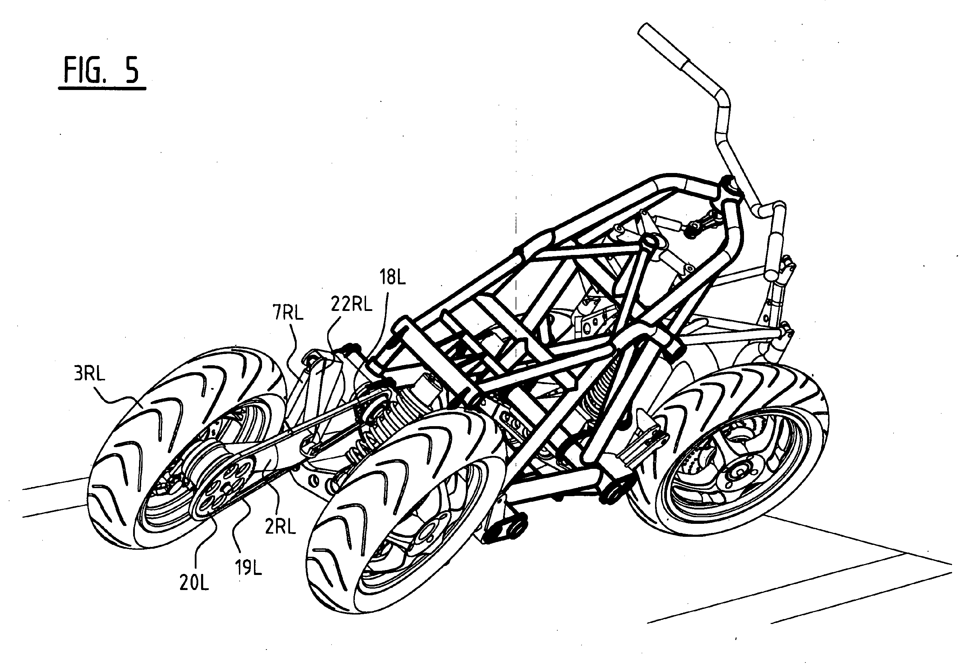

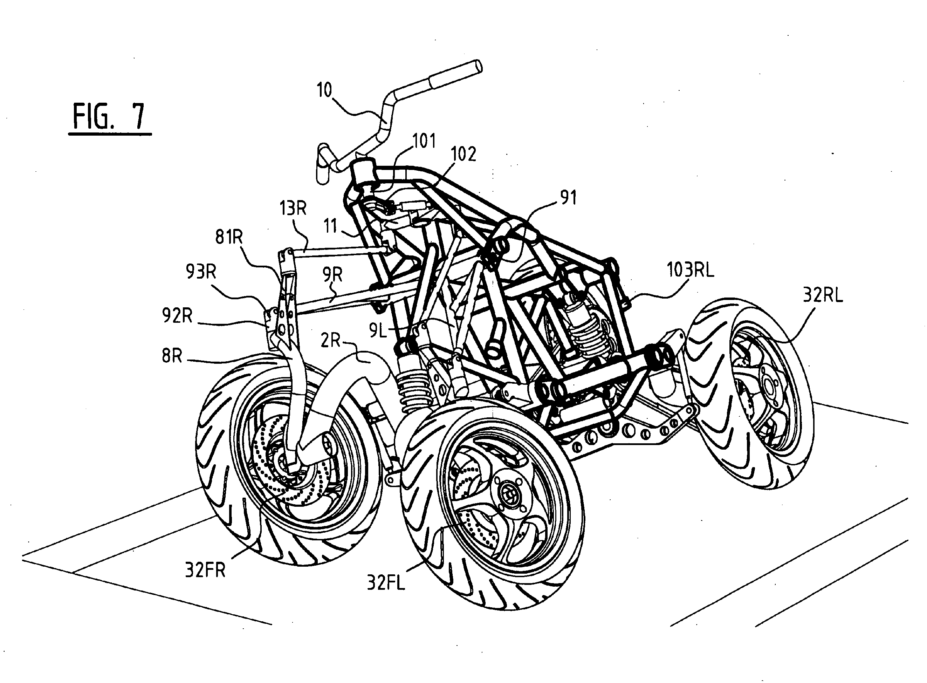

According to the Figures 1 - 7 a motorcycle vehicle comprises a frame 1, which is shown merely schematically, on which various parts of the vehicle are mounted. In practice the frame may have a different shape.

Two rear swing arms 2RL, 2RR are each pivotally mounted on the lower rear side of the frame 1 on a horizontal lateral pivot axis 21R and extend in the rearward direction of the vehicle from said frame 1. Said rear swing arms 2RL, 2RR each bear a rear wheel 3RL, 3RR at their respective ends. Each wheel 3RL, 3RR is provided with a disc brake 32RL, 32RR.

Two front swing arms 2FL, 2FR are each pivotally mounted on the lower front side of the frame 1 on a horizontal lateral pivot axis 21F and extend in the forward direction of the vehicle from said frame 1. Said front swing arms 2FL, 2FR each bear a front wheel 3FL, 3FR at their respective ends. Each front wheel 3FL, 3FR is provided with a disc brake 32FL, 32FR.

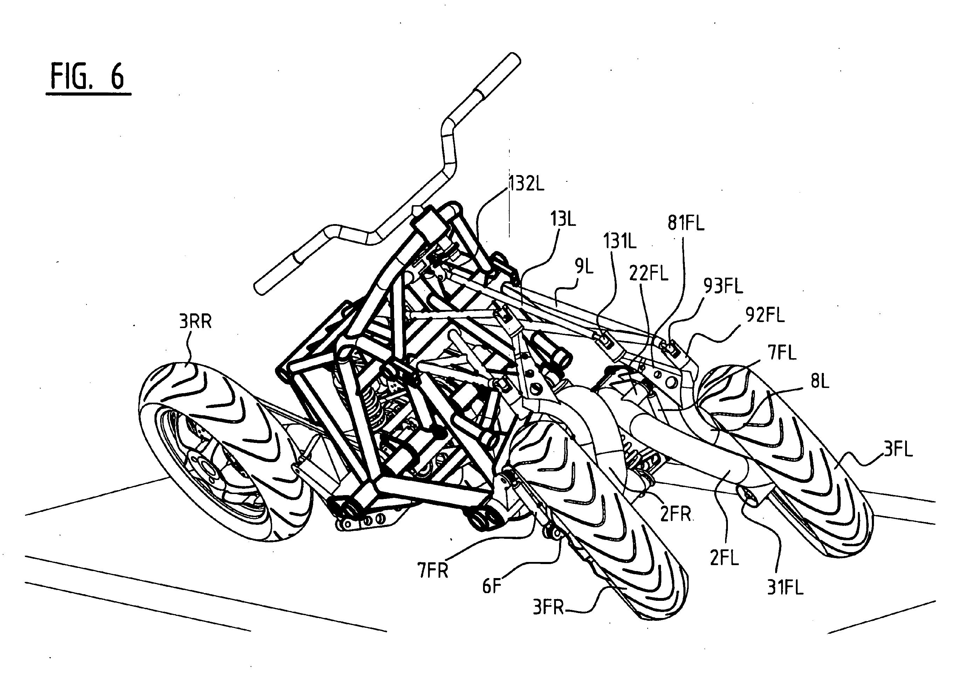

Said swing arms 2RL, 2RR, 2FL, 2FR generally extend in a horizontal direction, albeit slightly sloping down from said frame 1, when the vehicle is in the upright position. The front swing arms 2FL, 2FR have a curved C-shape, which curve generally extends in an upward and laterally inward plane when the vehicle is in the upright position. The inward orientation of the curve accommodates pivoting of the front wheels 3FL, 3FR when the vehicle takes a turn. The upward orientation of the curve prevents the swing arms 2FL, 2FR from touching the road when the vehicle is leaning to a side (see Figure 6).

A rear balancer carrier beam 4R is pivotally mounted on the lower rear side of the frame 1 on a horizontal lateral pivot axis 41R and extends from said frame 1 in the backward direction of the vehicle. Said pivot axis 41R extends at a short distance below and in front of the pivot axis 21R of the rear swing arms 2RL, 2RR. The other end of the rear balancer carrier beam 4R is mounted to the upper rear side of the frame 1 by means of an upwardly extending rear shock absorber 5R.

On the central part of said rear balancer carrier beam 4R a rear balancer beam 6R is pivotally mounted at its centre on a substantially horizontal and longitudinal rotation axis 61R. The ends of said balancer beam 6R are each connected with one of the rear swing arms 2RL, 2RR by means of respective linking rods 7RL, 7RR, which extend in a substantially vertical direction and substantially perpendicular to the swing arms 2RL, 2RR. Said linking rods 7RL, 7RR are mounted on said balancer beam 6R by means of a ball joint so that they can pivot in all directions. At their other ends the linking rods 7RL, 7RR are likewise mounted on the swing arms 2RL, 2RR by means of ball joints. In order to achieve a compact built of the motorcycle, said linking rods 7RL, 7RR extend on the lateral outer sides of the swing arms 2RL, 2RR, cross the plane through the pivot axis 21R and the wheel axes 31RL, 31RR, and are mounted on extensions 22RR, 22RL of the swing arms 2RR, 2RL, which extensions extend from said swing arms 2RR, 2RL in lateral outward and upward directions.

The balancer beam 6R causes the rear swing arms 2RL, 2RR to pivot at equal angles in opposite directions.

A front balancer carrier beam 4F is pivotally mounted on the lower front side of the frame 1 on a horizontal lateral pivot axis 41F and extends from said frame 1 in the forward direction of the vehicle. Said pivot axis 41F extends at a short distance below and behind the pivot axis 21 F of the front swing arms 2FL, 2FR. The other end of the front balancer carrier beam 4F is mounted to the upper front side of the frame 1 by means of an upwardly extending front shock absorber 5F.

On the central part of said front balancer carrier beam 4F a front balancer beam 6F is pivotally mounted at its centre on a substantially horizontal and longitudinal rotation axis 61F. The ends of said balancer beam 6F are each connected with one of the front swing arms 2FL, 2FR by means of respective linking rods 7FL, 7FR, which extend in a substantially vertical direction and substantially perpendicular to the swing arms 2FL, 2FR. Said linking rods 7FL, 7FR are mounted on said balancer beam 6F by means of a ball joint so that they can pivot in all directions. At their other ends the linking rods 7FL, 7FR are likewise mounted on the swing arms 2FL, 2FR by means of ball joints. In order to achieve a compact built of the motorcycle, said linking rods 7FL, 7FR extend on the lateral outer sides of the swing arms 2FL, 2FR, cross the plane through the pivot axis 21F and the wheel axes 31FL, 31FR, and are mounted on extensions 22FR, 22FL of the swing arms 2FR, 2FL, which extensions extend from said swing arms 2FR, 2FL in lateral outward and upward directions.

The balancer beam 6F causes the front swing arms 2FL, 2FR to pivot at equal angles in opposite directions.

Suspension shafts 8L, 8R are rotatably mounted on the outer ends of each of the front swing arms 2FL, 2FR. Said suspension arms 8L, 8R each extend in a substantially vertical direction and are rotatable around a substantially vertical axis on the swing arms 2FL, 2FR. The suspension arms 8L, 8R bear the respective front wheels 3FL, 3FR, so that they can rotate around said vertical axes. The suspension arms 8L, 8R extend from the front wheel axes 31FL, 31FR upwards and have a curved shape so that they reach around the tires of the wheels 3FL, 3FR. The outer ends of the suspension arms 8L, 8R are located above said wheels 3FL, 3FR. Said upper outer ends of the suspension arms 8L, 8R are connected to the upper front part of frame 1 by means of secondary swing arms 9L, 9R. The secondary swing arms 9L, 9R have a triangular shape and are each pivotally mounted on the frame 1 on a horizontal pivot axis 91, and extend parallel to their respective swing arms 2FL, 2FR. The secondary swing arms 9L, 9R carry the upper outer ends of the respective suspension shafts 8L, 8R by means of connecting elements 92L, 92R, The outer ends of the secondary swing arms 9L, 9R and the connecting elements 92L, 92R are interconnected by means of ball joints 93L, 93R. The suspension shafts 8L, 8R are rotatably mounted in said connecting elements 92L, 92R such that they can rotate around their respective vertical axes.

The respective front swing arms 2FL, 2FR, the respective suspension shafts 8L, 8R, the respective secondary swing arms 9L, 9R and the frame 1 form parallelogram swing arrangements, whereby the suspension shafts 8L, 8R can move up and down with respect to the frame 1 while maintaining their upward orientation.

The suspension shafts 8L, 8R are each provided with wheel steering arms 81L, 81R, which extend from the upper part of the suspension shafts 8L, 8R in upward and laterally inward direction.

A handlebar 10 for steering the vehicle is mounted on the upper front side of the frame 1. The handlebar 10 comprises a shaft 101 which can rotate around a substantially vertical axis in the frame 1. The lower end of the shaft is provided with a short handlebar steering arm 102 extending in a rearward direction to the right side of the vehicle. On the upper part of the frame 1 further rearward of the handlebar axis a lever 11 is mounted on a vertical shaft, such that the lever can rotate around a vertical axis. A lever arm 111 extends from the centre of the lever 11 in a forward direction to the left side of the vehicle. The outer end of the lever arm 111 is connected with the outer end of the handlebar steering arm 102 by means of a short rod 12, which is pivotally connected to both said lever arm 111 and said handlebar steering arm 102. Thereby a left rotation of the handlebar results in a right rotation of the lever 11 and vice versa.

Each of the outer ends of the lever 11 are connected with the respective outer ends of the wheel steering arms 81L, 81R by means of long rods 13L, 13R, which are each at both ends rotatably connected to said lever 11 at one end and said wheel steering arms 102 at the other end by means of ball joints 131L, 131R, 132L, 132R. Thereby a right rotation of the lever 11 results in a left rotation of the front wheels 3FL, 3FR and vice versa.

A motor engine (not shown) is mounted in the frame 1, and has a rotatable driving shaft 14 which extends parallel to and above the rear swing arm pivot axis 21R. A driving sprocket wheel 15 on said shaft 14 is connected by a chain 16 with a driven sprocket wheel that is fixedly mounted on the intermediate free rotating shaft 21R forming said pivot axis.

Said shaft 21R is further provided with two driving sprocket wheels 18L, 18R. Said driving sprocket wheels 18L, 18R are connected by chains 19L, 19R with the driven sprocket wheels 20L, 20R of the rear wheels 3RL, 3RR. The driving sprocket wheels 18L, 18R are one-way sprocket wheels, such that if the vehicle makes a turn, the outer wheel can rotate freely at a higher speed than the driven inner wheel.

The frame 1 is provided with four firm rubber stopper protrusions 103RL, 103RR, 103FL, 103FR, each extending towards one of the swing arms 2RL, 2RR, 2FL, 2FR. Thereby the upward inclination of the swing arms 2RL, 2RR, 2FL, 2FR is limited to such an extent that the maximum leaning angle of the motorcycle vehicle is 48 degrees relative to the upright position. The stopper protrusions 103RL, 103RR, 103FL, 103FR also prevent that the metal parts of the vehicle are damaged when the vehicle leans completely sidewards at standstill. The vehicle can however be easily parked in the upright position by locking all four disc brakes 32RL, 32RR, 32FL, 32FR, as explained above.

## Claims

1. Motorcycle vehicle, comprising:
a frame (1) having vertical, longitudinal and lateral orientations in the upright position of the vehicle;
at least one pair of two spaced apart swing arms (2) pivotally mounted thereon at one end on a substantially laterally extending swing pivot axis (21), which swing arms (2) extend in a substantially longitudinal direction in the upright position of the vehicle, wherein each swing arm (2) bears a front or rear wheel (3) at its other end on a wheel axis (31);
a balancer beam (6) rotatably mounted on a rotation axis (61) on the frame (1) near its centre; and
at least two linking rods (7), each linking rod (7) being pivotally connected to one end of the balancer beam (6) at one end and being pivotally connected to one of said swing arms (2) at its other end;
wherein in the upright position of said vehicle one end of each of said linking rods (7) is positioned below the swing plane extending trough both swing pivot axes (21) and both wheel axes (31), and
said balancer beam (6) with the lower ends of the linking rods (7) extend below said swing plane, **characterized in that** the other end of each of said linking rods (7) is positioned above said swing plane and the upper ends of said linking rods (7) being connected to said swing arms (2) extend a substantial distance above said swing plane.

2. Motorcycle vehicle according to claim 1, wherein said swing arms (2) each comprise an extension (22), extending substantially above said swing plane, on which extension (22) the linking rods (7) are mounted.

3. Motorcycle vehicle according to claim 1 or 2, wherein the rotation axis (61) of said balancer beam extends in a substantially longitudinal direction.

4. Motorcycle vehicle according to any one of the previous claims, wherein the length of said balancer beam (6) is greater than the distance between the inner sides of the two associated front or rear wheels (3) in the upright position of the motorcycle vehicle.

5. Motorcycle vehicle according to any one of the previous claims, wherein said balancer beam (6) is mounted on said frame (1) by means of a balancer carrier beam (4), which balancer carrier beam (4) is pivotally mounted on the frame (1) at one end on a substantially laterally extending balancer pivot axis (41), and which beam (4) is further connected to the frame (1) at a distance from said pivot axis (41) by means of a shock absorber (5).

6. Motorcycle vehicle according to any one of the previous claims, wherein said motorcycle vehicle is a four wheeled motorcycle vehicle comprising one said balancer (6F), a pair of said linking rods (7FL, 7FR) and a pair of said swing arms (2FL, 2FR) on the front side of the frame (1) each bearing one of said front wheels (3FL, 3FR), and one said balancer (6F), a pair of said linking rods (7RL, 7RR) and a pair of said swing arms (2RL, 2RR) on the back side of the frame (1) each bearing one of said rear wheels (3RL, 3RR).

7. Motorcycle vehicle according to claim 6, wherein each of said wheels (3) is provided with a separate brake (32).

8. Motorcycle vehicle according to any one of the previous claims, wherein the distance between the parallel centre planes of the wheels (3) is constant and at least 300 mm, whereas the distance between the centre points of said wheels (3) increases when the motorcycle vehicle leans.

9. Motorcycle vehicle according to any one of the previous claims, wherein the distance between the parallel centre planes of the wheels (3) is constant and at is smaller than 700 mm.

10. Motorcycle vehicle according to any one of the previous claims, wherein said frame is provided with at least one pair of stopper protrusions (103) extending towards at least one pair of said swing arms (2) or moving parts connected therewith, such that the upward inclination of said swing arms (2) is limited.

11. Motorcycle vehicle according to claim 9 or 10, wherein the outer ends of said stopper protrusions (103) are made of a resilient material.

12. Motorcycle vehicle according to any one of the previous claims, wherein said motorcycle vehicle is provided with a motor engine, wherein each of said two wheels (3) on a pair of swing arms (2) is provided with a driven sprocket wheel (20), wherein said engine is arranged to drive two driving sprocket wheels (18), which in turn each are arranged to drive one of said two driven sprocket wheels (20) by means of chains (16, 19), wherein said driving sprocket wheels (18) and/or said driven sprocket (20) wheels are one-way sprocket wheels.

13. Motorcycle vehicle according to any one of the previous claims, wherein said motorcycle vehicle is provided with a motor engine having a driving shaft (14) provided with a driving sprocket wheel (15) or gear wheel, wherein an intermediate shaft (21) comprising one driven sprocket wheel or gear wheel which is arranged to be driven by said motor engine and two driving sprocket wheels (18) is rotatably mounted on the pivot axis of said swing arms (2), wherein each of said two wheels (3) on a pair of swing arms (2) is provided with a driven sprocket wheel (20) which is arranged to be driven by a driving sprocket wheel on said intermediate shaft (21).

14. Motorcycle vehicle according to claim 13, wherein the driving shaft (14) of said motor engine is located in the space extending above the intermediate between two planes through the shaft (21), which planes include angles with the vertical plane of +45 degrees and -45 degrees respectively.

15. Motorcycle vehicle according to anyone of the previous claims, wherein said motorcycle vehicle comprises one pair of said swing arms (2FL, 2FR) at the front side of the vehicle;
wherein the front wheels (3FL, 3FR) are suspended to a pair of substantially vertical rotatable suspension shafts (8L, 8R) on each of said swing arms (2FL, 2FR), said suspension shafts (8L, 8R) being part of a pair of parallelogram swing arrangements each further comprising said swing arm (2FL, 2FR), a secondary swing arm (9L, 9R) and said frame (1);
wherein said suspension shafts (8L, 8R) each comprise a wheel steering arm (81L, 81R) extending to a side of the axis of said shaft (8L, 8R);
wherein said vehicle further comprises a handlebar (10) for steering said front wheels (3FL, 3FR), said handlebar (10) being mounted on a substantially vertical steering shaft (101) which is rotatably mounted in said frame (1), wherein a handlebar steering arm (102) extends from said shaft (101); and
wherein said handlebar steering arm (102) on the one side and said wheel steering arms (81L, 81R) on the other side are mutually connected through a link arrangement comprising at least one rod (12, 13).

16. Motorcycle vehicle according to claim 15, wherein said link arrangement comprises a lever (11), a pair of first long rods (13L, 13R)) and a second shorter rod (12);
wherein said lever (11) is rotatably mounted on said frame (1) on a substantially vertical lever shaft;
wherein first ends of said first rods (13L, 13R) are pivotally connected to the ends of each of said wheel steering arms (81L, 81R), wherein the other ends of said first rods (13L, 13R) are pivotally connected to respective ends of said lever (11); and
wherein a first end of said second rod (12) is pivotally connected to the end of said handlebar steering arm (102) and the other end of said second rod (12) is pivotally connected to said lever (11).

17. Motorcycle vehicle according to claim 16, wherein said lever shaft extends at a distance behind the steering shaft (101).

18. Motorcycle vehicle according to claim 16 or 17, wherein said handlebar steering arm (102) extends in an oblique backward direction from the steering shaft (101) while the front wheels (3FL, 3FR) are in the forward direction.

19. Motorcycle vehicle according to claim 16, 17 or 18, wherein the other end of said second rod (12) is connected to a lever arm (111) which extends in an oblique forward direction from the lever shaft while the front wheels (3FL, 3FR) are in the forward direction.

## Patentansprüche

1. Motorradartiges Fahrzeug, mit:
einem Rahmen (1) mit vertikalen, longitudinalen und lateralen Ausrichtungen in der aufrechten Position des Fahrzeugs;
wenigstens einem Paar von zwei voneinander beabstandeten Schwingarmen (2), die an einem Ende an dem Rahmen an einer sich im Wesentlichen lateral erstreckenden Schwinggelenkachse (21) befestigt sind, wobei sich die Schwingarme (2) n der aufrechten Position des Fahrzeugs in einer im Wesentlichen longitudinalen Richtung erstrecken, wobei jeder Schwingarm (2) an seinem anderen Ende auf einer Radachse (31) ein Vorderrad oder ein Hinterrad (3) trägt;
einer Ausgleichsstange (6), die drehbar auf einer Drehachse (61) an dem Rahmen (1) in der Nähe seiner Mitte befestigt ist; und
wenigstens zwei Verbindungsstangen (7), wobei jede Verbindungsstange (7) an seinem einem Ende verschwenkbar mit einem Ende der Ausgleichsstange (6) verbunden ist und an seinem anderen Ende mit einem Ende der Schwingarme (2) verschwenkbar verbunden ist;
wobei in der aufrechten Position des Fahrzeugs ein Ende jeder der Verbindungsstangen (7) unterhalb der Schwingebene, die sich durch sowohl die Schwingschwenkachsen (21) und beide Radachsen (31) erstreckt, positioniert ist und die Ausgleichsstange (6) mit den unteren Enden der Verbindungsstangen (7), die sich unterhalb der Schwingebene erstrecken, positioniert ist, **dadurch gekennzeichnet, dass** das andere Ende jeder der Verbindungsstangen (7) oberhalb der Schwingebene positioniert ist und die oberen Enden der Gelenkstangen (7), die mit den Schwingarmen (2) verbunden sind, sich mit einem erheblichen Abstand oberhalb der Schwingebene erstrecken.

2. Motorradartiges Fahrzeug nach Anspruch 1, wobei die Schwingarme (2) jeweils eine Extension (22) aufweisen, die sich im Wesentlichen oberhalb der Schwingebene erstreckt, wobei die Verbindungsstangen (7) auf der Extension (22) montiert sind.

3. Motorradartiges Fahrzeug nach Anspruch 1 oder 2, wobei die Rotationsachse (61) der Ausgleichsstange in einer sich im Wesentlichen longitudinalen Richtung erstrecken.

4. Motorradartiges Fahrzeug nach einem der vorangehenden Ansprüche, wobei die Länge der Ausgleichsstange (6) größer ist als der Abstand zwischen den inneren Seiten der beiden zugehörigen Vorder- oder Hinterräder (3) in der aufrechten Position des motorradartigen Fahrzeugs.

5. Motorradartiges Fahrzeug nach einem der vorangehenden Ansprüche, wobei die Ausgleichsstange (6) auf dem Rahmen (1) mittels einer Ausgleichsträgerstange (4) montiert ist, die schwenkbar an dem Rahmen (1) an einem Ende auf einer sich im Wesentlichen lateral erstreckenden Ausgleichsschwenkachse (61) montiert ist und die Stange (4) weiter mit dem Rahmen (1) mit einem Abstand von der Schwenkachse (41) mittels eines Stoßdämpfers (5) verbunden ist.

6. Motorradartiges Fahrzeug nach einem der vorangehenden Ansprüche, wobei einer der Ausgleicher (6F) ein Paar der Verbindungsstangen (7FL, 7FR) und ein Paar der Schwingarme (2FL, 2FR) auf der Vorderseite des Rahmens (1) jeweils eines der Vorderräder (3FL, 3FR) trägt und einer der Ausgleicher (6F) ein Paar der Verbindungsstangen (7RL, 7FR) und ein Paar der Schwingarme (2RL, 2RR) auf der hinteren Seite des Rahmens (1) jeweils eines der Hinterräder (3RL, 3FR) trägt.

7. Motorradartiges Fahrzeug nach Anspruch 6, wobei jedes der Räder (3) mit einer gesonderten Bremse (32) versehen ist.

8. Motorradartiges Fahrzeug nach einem der vorangehenden Ansprüche, wobei der Abstand zwischen den parallelen Mittelebenen der Räder (3) konstant ist und wenigsten 300 mm beträgt, während der Abstand zwischen den Mittelpunkten der Räder (3) zunimmt, wenn das motorradartiges Fahrzeug geneigt ist.

9. Motorradartiges Fahrzeug nach einem der vorangehenden Ansprüche, wobei der Abstand zwischen den parallelen Mittelebenen der Räder (3) konstant ist und weniger als 700 mm trägt.

10. Motorradartiges Fahrzeug nach einem der vorangehenden Ansprüche, wobei der Rahmen mit wenigstens einem Paar von Anschlagsvorsprüngen (103) versehen ist, die sich in Richtung auf wenigstens ein Paar der Schwingarme (2) oder Bewegungsteile, die mit diesen verbunden sind, derart erstreckt, dass die aufrechte Neigung der Schwingarme (2) begrenzt ist.

11. Motorradartiges Fahrzeug nach Anspruch 8 oder 9, wobei die äußeren Enden der Anschlagsvorsprünge (103) aus einem nachgiebigen Material gefertigt sind.

12. Motorradartiges Fahrzeug nach einem der vorangehenden Ansprüche, wobei das motorradartige Fahrzeug mit einem Motor versehen ist, wobei jedes der beiden Räder (3) auf einem Paar von Schwingarmen (2) mit einem angetriebenen Zahnkranz (20) versehen ist,
wobei die Motor zum Antreiben von zwei antreibenden Zahnkränzen (18) ausgebildet ist, die wiederum zum Antreiben der beiden angetriebenen Zahnkränze (20) mittels Ketten (16, 18) ausgebildet ist, wobei die antreibenden Zahnkränze (18) und/oder die angetriebenen Zahnkränze (20) Freilauf-Zahnkränze sind.

13. Motorradartiges Fahrzeug nach einem der vorangehenden Ansprüche, wobei das motorradartige Fahrzeug mit einem Motor und mit einer Antriebswelle (14), die mit einem antreibenden Zahnkranz (15) oder einem Zahnrad versehen sind, wobei eine Zwischenwelle (21) mit einem angetriebenen Zahnkranz oder einem Zahnrad, das für einen Antrieb durch den Motor angeordnet ist und zwei antreibende Zahnkränze (18) drehbar auf der Schwenkachse der Schwingarme (2) angeordnet ist, wobei jedes der beiden Räder (3) auf einem Paar der Schwingarme (2) mit einem angetriebenen Zahnkranz (20) versehen ist, der zum Antrieb durch einen angetriebenen Zahnkranz auf der Zwischenwelle (21) angeordnet ist.

14. Motorradartiges Fahrzeug nach Anspruch 13, wobei die Antriebswelle (14) des Motors in dem Raum, der sich oberhalb des Zwischenraums zwischen den beiden Ebenen durch die Welle (21) angeordnet ist, wobei die ebenen Winkel mit der vertikalen Ebene von +45° bzw. -45° einschließen.

15. Motorradartiges Fahrzeug nach einem der vorangehenden Ansprüche, wobei das Motorradartiges Fahrzeug ein Paar der Schwingarme (2FL, 2FR) an der Vorderseite des Fahrzeugs aufweisen;
wobei die Vorderräder (3FL, 3FR) zu einem Paar von im Wesentlichen vertikal drehbaren Aufhängungswellen (8L, 8R) auf jedem der Schwingarme (2FL, 2FR) abgehängt sind, wobei die Aufhängungswellen (8L, 8R) ein Teil des Paares von ein Parallelogramm bildenden Schwinganordnungen sind, die weiter die Schwingarme (2FL, 2FR) und sekundäre Schwingarme (9L, 9R) und den Rahmen (1) aufweisen;
wobei die Aufliängungswellen (8L, 8R) jeweils einen Radlenkarm (31L, 31R) aufweisen, der sich zu einer Seite der Achse der Welle (8L, 8R) erstrecken,
wobei das Fahrzeug weiter einen Lenker (10) zum Lenken der Vorderräder (3FL, 3FR) aufweisen, der auf einer im Wesentlichen vertikalen Lenksäule (101) montiert sind, die drehbar in dem Rahmen (1) montiert ist, wobei ein Lenkersteuerarm (102) sich von der Lenksäule (101) erstreckt; und
wobei der Lenksteuerarm (102) auf der einen Seite und die Radlenkarme (31L, 31R) auf der anderen Seite miteinander durch eine Gelenkanordnung verbunden sind, die wenigstens eine Stange (12, 13) aufweist.

16. Motorradartiges Fahrzeug nach Anspruch 15, wobei die Gelenkanordnung einen Hebel (11), ein Paar von ersten langen Stangen (13L, 13R) und eine zweite kürzere Stange (12) aufweist,
wobei der Hebel (11) drehbar auf dem Rahmen (11) auf einer im Wesentlichen vertikalen Hebelwelle erstreckt,
wobei die ersten Enden der ersten Stangen (13L, 13R) verschwenkbar mit den Enden jeder der Radsteuerarme (31L, 31R) verbunden ist, wobei die anderen Enden der ersten Stangen (13L, 13R) schwenkbar mit den jeweiligen Enden des Hebels (11) verbunden sind, und
wobei ein erstes Ende der zweiten Stange (12) verschwenkbar mit dem Ende des Lenksteuerarms (102) verbunden ist und das andere Ende der zweiten Stange (12) verschwenkbar mit dem Hebel (11) verbunden ist.

17. Motorradartiges Fahrzeug nach Anspruch 16, wobei die Hebelwelle sich mit einem Abstand hinter der Lenksäule (101) erstreckt.

18. Motorradartiges Fahrzeug nach Anspruch 16 oder 17, wobei der Lenksteuerarm (102) sich in einer nach hinten geneigten Richtung von der Steuerwelle (102) erstreckt, während die Vorderräder (3FL, 3FR) in der nach vorne weisenden Richtung sind.

19. Motorradartiges Fahrzeug nach Anspruch 16, 17 oder 18, wobei das anderen Enden der zweiten Stange (12) mit einem Hebelarm (111) verbunden ist, der sich in einer nach vorne geneigten Richtung von der Hebelwelle erstreckt, während die Vorderräder (3FL, 3FR) in der nach vorne weisenden Richtung sind.

## Revendications

1. Véhicule motocycle, comprenant :
un châssis (1) ayant des orientations verticales, longitudinales et latérales en position verticale du véhicule ;
au moins une paire de deux bras oscillants espacés (2) l'un de l'autre montés de manière pivotante sur celui-ci au niveau d'une extrémité sur un axe (21) d'oscillation s'étendant de manière sensiblement latérale, lesquels bras oscillants (2) s'étendent dans une direction sensiblement longitudinale en position verticale du véhicule, dans lequel chaque bras oscillant (2) porte une roue (3) avant ou arrière au niveau de son autre extrémité sur un axe (31) de roue ;
un arbre (6) d'équilibrage monté de manière rotative sur un axe (61) de rotation sur le châssis (1) à proximité du centre ; et
au moins deux tiges (7) de liaison, chaque tige (7) de liaison étant reliée de manière pivotante avec une extrémité de l'arbre (6) d'équilibrage à une extrémité, et reliée de manière pivotante avec l'un des bras oscillants (2) à l'autre extrémité ;
dans lequel en position verticale dudit véhicule, une extrémité de chacune desdites tiges (7) de liaison est positionnée sous le plan d'oscillation qui s'étend à travers les deux axes (21) d'oscillation et les deux axes (31) de roue, et ledit arbre (6) d'équilibrage avec les extrémités inférieures des tiges (7) de liaison s'étendent en-dessous dudit plan d'oscillation,
**caractérisé en ce que** l'autre extrémité de chacune desdites tiges (7) de liaison est positionnée au-dessus dudit plan d'oscillation et les extrémités supérieures desdites tiges (7) de liaison reliées avec lesdits bras oscillants (2) s'étendent sur une distance substantielle au-dessus dudit plan d'oscillation.

2. Véhicule motocycle selon la revendication 1, dans lequel lesdits bras oscillants (2) comprennent chacun une extension (22), s'étendant sensiblement au-dessus dudit plan d'oscillation, sur laquelle extension (22) les tiges (7) de liaison sont montées.

3. Véhicule motocycle selon la revendication 1 ou 2, dans lequel l'axe (61) de rotation dudit arbre d'équilibrage s'étend dans une direction sensiblement longitudinale.

4. Véhicule motocycle selon l'une des revendications précédentes, dans lequel la longueur dudit arbre (6) d'équilibrage est supérieure à la distance entre les côtés intérieurs des deux roues (3) avant ou arrière associées en position verticale du véhicule motocycle.

5. Véhicule motocycle selon l'une des revendications précédentes, dans lequel ledit arbre (6) d'équilibrage est monté sur ledit châssis (1) au moyen d'un arbre (4) de support d'équilibrage, lequel arbre (4) de support d'équilibrage est monté de manière pivotante sur le châssis (1) au niveau d'une extrémité sur un axe (41) de pivotement d'équilibrage s'étendant de manière sensiblement latérale, et lequel arbre (4) est en outre relié avec le châssis (1) à distance dudit axe (41) de pivotement au moyen d'un amortisseur (5).

6. Véhicule motocycle selon l'une des revendications précédentes, dans lequel ledit véhicule motocycle est un véhicule motocycle à quatre roues comprenant l'un desdits dispositifs (6F) d'équilibrage, une paire desdites tiges (7FL, 7FR) de liaison et une paire desdits bras oscillants (2FL, 2FR) sur le côté avant du châssis (1) portant chacun l'une desdites roues avant (3FL, 3FR), et l'un desdits dispositifs (6F) d'équilibrage, une paire desdites tiges (7RL, 7RR) de liaison et une paire desdits bras oscillants (2RL, 2RR) sur le côté arrière du châssis (1) portant chacun l'une desdites roues arrière (3RL, 3RR).

7. Véhicule motocycle selon la revendication 6, dans lequel chacune desdites roues (3) est munie d'un frein distinct (32).

8. Véhicule motocycle selon l'une des revendications précédentes, dans lequel la distance entre les plans médians parallèles des roues (3) est constante et d'au moins 300 mm, tandis que la distance entre les points centraux desdites roues (3) augmente lorsque le véhicule motocycle se penche.

9. Véhicule motocycle selon l'une des revendications précédentes, dans lequel la distance entre les plans médians parallèles des roues (3) est constante et inférieure à 700 mm.

10. Véhicule motocycle selon l'une des revendications précédentes, dans lequel ledit châssis est muni d'au moins une paire de protubérances (103) d'arrêt s'étendant vers au moins une paire desdits bras oscillants (2) ou de parties mobiles reliées avec ceux-ci, de telle sorte que l'inclinaison vers le haut desdits bras oscillants (2) est limitée.

11. Véhicule motocycle selon la revendication 9 ou 10, dans lequel les extrémités extérieures desdites protubérances (103) d'arrêt sont constituées d'un matériau élastique.

12. Véhicule motocycle selon l'une des revendications précédentes, dans lequel ledit véhicule motocycle est muni d'un moteur, dans lequel chacune desdites deux roues (3) sur une paire de bras oscillants (2) est dotée d'une roue dentée entraînée (20), dans lequel ledit moteur est agencé pour entraîner deux roues dentées (18) d'entraînement, qui à leur tour sont chacune agencées pour entraîner l'une desdites deux roues dentées entraînées (20) au moyen de chaînes (16, 19), dans lequel lesdites roues dentées (18) d'entraînement et/ou lesdites roues dentées entraînées (20) sont des roues dentées à sens unique.

13. Véhicule motocycle selon l'une des revendications précédentes, dans lequel ledit véhicule motocycle est muni d'un moteur ayant un arbre (14) d'entraînement doté d'une roue dentée (15) ou d'une roue d'engrenage d'entraînement, dans lequel un arbre intermédiaire (21) comprenant une roue dentée ou une roue d'engrenage entraînée qui est agencée pour être entraînée par ledit moteur et deux roues dentées (18) d'entraînement est monté de manière pivotante sur l'axe de pivotement desdits bras oscillants (2), dans lequel chacune desdites deux roues (3) sur une paire de bras oscillants (2) est munie d'une roue dentée entraînée (20) qui est agencée pour être entraînée par une roue dentée d'entraînement sur ledit arbre intermédiaire (21).

14. Véhicule motocycle selon la revendication 13, dans lequel l'arbre (14) d'entraînement dudit moteur est situé dans l'espace s'étendant au dessus de l'espace intermédiaire entre deux plans à travers l'arbre (21), lesquels plans forment des angles avec le plan vertical de + 45 degrés et de - 45 degrés respectivement.

15. Véhicule motocycle selon l'une des revendications précédentes, dans lequel ledit véhicule motocycle comprend une paire desdits bras oscillants (2FL, 2 FR) au niveau du côté avant du véhicule ;
dans lequel les roues avant (3FL, 3FR) sont suspendues à une paire d'arbres (8L, 8R) de suspension pivotables sensiblement verticaux sur chacun desdits desdits bras oscillants (2FL, 2FR), lesdits arbres (8L, 8R) de suspension faisant partie d'une paire d'agencements oscillants en parallélogramme comprenant chacun, en outre, ledit bras oscillant (2FL, 2FR), un bras oscillant secondaire (9L, 9R) et ledit châssis (1) ;
dans lequel lesdits arbres (8L, 8R) de suspension comprennent chacun un bras (81 L, 81 R) de direction de roue s'étendant d'un côté de l'axe dudit arbre (8L, 8R) ;
dans lequel ledit véhicule comprend en outre un guidon (10) permettant de diriger lesdites roues avant (3FL, 3FR), ledit guidon (10) étant monté sur un arbre (101) de direction sensiblement vertical qui est monté de manière pivotante dans ledit châssis (1), dans lequel un bras (102) de direction de guidon s'étend à partir dudit arbre (101) ; et
dans lequel ledit bras (102) de direction de guidon d'un côté et lesdits bras (81 L, 81 R) de direction de roue de l'autre côté sont mutuellement reliés à travers un agencement de liaison comprenant au moins une tige (12, 13).

16. Véhicule motocycle selon la revendication 15, dans lequel ledit agencement de liaison comprend un levier (11), une paire de premières tiges longues (13L, 13R) et une deuxième tige plus courte (12) ;
dans lequel ledit levier (11) est monté de manière pivotante sur ledit châssis (1) sur un arbre de levier sensiblement vertical ;
dans lequel les premières extrémités desdites premières tiges (13L, 13R) sont reliées de manière pivotante avec les extrémités de chacun desdits bras (81 L, 81 R) de direction de roue, dans lequel les autres extrémités desdites premières tiges (13L, 13R) sont reliées de manière pivotante avec les extrémités respectives dudit levier (11) ; et
dans lequel une première extrémité de ladite deuxième tige (12) est reliée de manière pivotante avec l'extrémité dudit bras (102) de direction de guidon et l'autre extrémité de ladite deuxième tige (12) est reliée de manière pivotante avec ledit levier (11).

17. Véhicule motocycle selon la revendication 16, dans lequel ledit arbre de levier s'étend à distance derrière l'arbre (101) de direction.

18. Véhicule motocycle selon la revendication 16 ou 17, dans lequel ledit bras (102) de direction de guidon s'étend dans une direction oblique vers l'arrière à partir de l'arbre (101) de direction alors que les roues avant (3FL, 3FR) sont dans la direction vers l'avant.

19. Véhicule motocycle selon la revendication 16, 17 ou 18, dans lequel l'autre extrémité de ladite deuxième tige (12) est reliée avec un bras (111) de levier qui s'étend dans une direction oblique vers l'avant à partir de l'arbre de levier alors que les roues avant (3FL, 3FR) sont dans la direction vers l'avant.
